# EUROPÄISCHE PATENTANMELDUNG

(11) **EP 0 590 408 A1**
(43) Veröffentlichungstag der Anmeldung: **06.04.1994**
(21) Anmeldenummer: 93114821.7
(22) Anmeldetag: 15.09.1993
(51) Int. Cl.: B23D 61/02, B27G 13/08, B27G 13/14

(54) **Werkzeug zum Fräsen von Nuten und Falzen**

(30) Priorität: 29.09.1992 DE 9212980 U
(71) Anmelder: Ledermann GmbH, D-72160 Horb (DE)
(72) Erfinder: Hungerbühler, Manfred, CH-9429 Zelg (CH)
(74) Vertreter: Wasmuth, Rolf, Dipl.-Ing.

(57) **Zusammenfassung**

Die Erfindung betrifft ein Werkzeug zum Fräsen von Nuten oder Falzen, bestehend aus einem rotationssymmetrischen Grunkörper, auf dessen Umfang in Drehrichtung (14) vor je einem Nutschneider (3) ein Vorschneider (1) angeordnet ist sowie mit einem in Drehrichtung (14) vor dem Nutschneider ausgebildeten Spanraum (2) im Grundkörper (4). Zur Steigerung der Schnittleistung ist der Vorschneider (1) an dem dem Nutschneider (3) abgewandten Ende (22) des Spanraums (2) angeordnet und liegt der Drehrichtung (14) zum Nutschneider (3) hin flach geneigt, wobei er mit der Radialen (15) durch den Vorschneider (1) einen spitzen Spanwinkel (13) begrenzt.

## Beschreibung

Die Erfindung betrifft ein Werkzeug zum Fräsen von Nuten oder Falzen nach dem Oberbegriff des Anspruchs 1.

Mit einem derartigen Werkzeug werden in Holz, Holzwerkstoffe, Kunststoffe oder andere Nicht-Eisen-Metalle Nuten oder Falze eingebracht.

Bei derartigen Fräswerkzeugen ist bekannt, vor dem Nutschneider einen Spanraum im Grundkörper auszubilden und den Vorschneider in Umfangsrichtung vorlaufend anzuordnen, wobei dem Vorschneider ein weiterer im Werkzeugkörper ausgebildeter Spanraum zugeordnet ist. Eine derartige Anordnung benötigt einen entsprechend großen Umfangsabschnitt des Grundkörpers, so daß die Anzahl der über den Umfang anzuordnenden Vorschneider und Nutschneider begrenzt ist.

Die Vorschubgeschwindigkeit eines derartigen Fräswerkzeugs ist bestimmt durch die Schnittleistung, welche durch die Anzahl der Vor- und Nutschneider sowie die Drehzahl des Werkzeuggrundkörpers bestimmt ist. Bei einer vorgegebenen Anzahl von Vor- und Nutschneidern und einer aufgrund der wirkenden physikalischen Kräfte möglichen maximalen Drehzahl ist eine maximale Schnittleistung festgelegt; damit ist auch die maximal mögliche Vorschubgeschwindigkeit bestimmt. Da derartige bekannte Fräswerkzeuge vermehrt in verketteten Produktionsanlagen eingesetzt werden, bestimmt die Schnittleistung des Nutwerkzeugs den Takt der gesamten Produktionsanlage.

Der Erfindung liegt die Aufgabe zugrunde, ein gattungsgemäßes Fräswerkzeug auf einfache Weise derart weiterzubilden, daß die Schnittleistung insbesondere im Durchmesser kleiner, schmaler Werkzeuge gesteigert ist.

Die Aufgabe wird erfindungsgemäß nach den kennzeichnenden Merkmalen des Anspruchs 1 gelöst.

Durch die Anordnung des Vorschneiders im Endbereich des Spanraums des Nutschneiders ist die für die Anordnung von Vorschneider und Nutschneider erforderliche Umfangsbogenlänge reduziert, so daß bei unverändertem Durchmesser des Fräswerkzeugs mehr Schneider angeordnet werden können, wodurch bei gleicher Drehzahl eine erhöhte Schnittleistung erzielt ist. Insbesondere in verketteten Produktionsanlagen führt die Leistungssteigerung des Fräswerkzeugs zu einer insgesamt schnelleren Taktzeit der Gesamtanlage, so daß diese wirtschaftlich effektiver genutzt werden kann.

In besonderer Ausgestaltung der Erfindung ist der Vorschneider in den Spanraum einragend ausgebildet, um die zur Anordnung der Schneider notwendige Bogenlänge auf ein Minimum zu verringern.

Dadurch, daß der Vorschneider einen geringeren Flugkreis aufweist als der Nutschneider, wird die Deckschicht nicht vollständig durchtrennt, sondern vom Vorschneider erfolgt nur ein Kerben mit seitlichem Anschneiden der Nutkante. Das exakte Schneiden der Nutkante erfolgt dann durch den Nutschneider. Die so erzielte geringe Belastung an der Nutkante macht höhere Vorschubgeschwindigkeiten möglich, wobei eine rißfreie Nutkante gewährleistet bleibt.

Der Vorschneider weist eine Dachschneide und eine Seitenschneide auf, wobei insbesondere das der Seitenschneide abgewandte Ende der Dachschneide in Drehrichtung des Fräswerkzeugs der Seitenschneide vorläuft, wodurch ein ziehender Schnitt erzielt ist. Die Belastung der Nutkanten ist so deutlich gesenkt, so daß ein Ausfransen derselben vermieden ist. Dabei ist von Vorteil, wenn das vorlaufende Ende der Dachschneide auf einem kleineren Flugkreis liegt als die radial höchste Erhebung des Vorschneiders selbst.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: in perspektivischer Darstellung einen Ausschnitt eines erfindungsgemäßen Fräswerkzeugs,
- Fig. 2: in Seitenansicht einen Ausschnitt eines Fräswerkzeugs,
- Fig. 3: eine Draufsicht auf einen Vorschneider des Fräswerkzeugs,
- Fig. 4: eine Draufsicht auf einen Nutschneider des Fräswerkzeugs,
- Fig. 5: eine Frontansicht entgegen Drehrichtung des Fräswerkzeugs,
- Fig. 6: ein Schnittbild eines Vorschneiders.

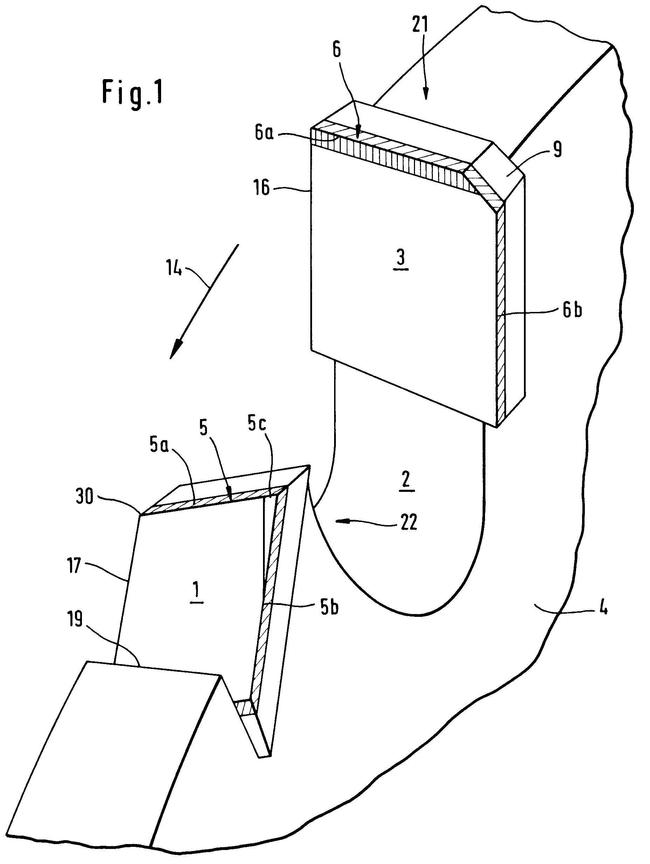

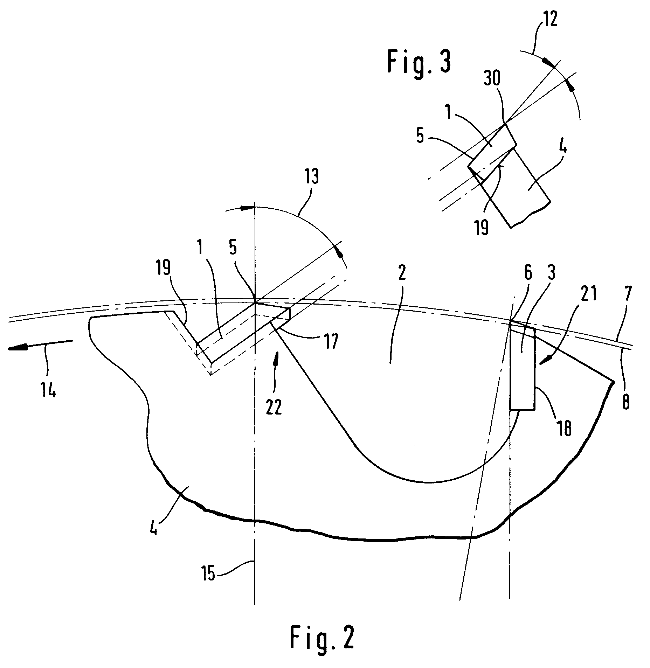

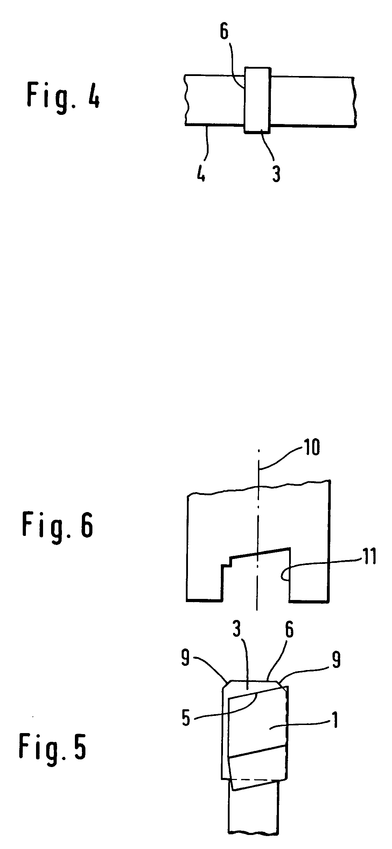

Das in Fig. 1 dargestellte Fräswerkzeug ist zum Fräsen von Nuten oder Falzen in Holz, Holzwerkstoffen, Kunststoffen oder andere Nicht-Eisen-Metalle vorgesehen, die eine empfindliche Oberfläche aufweisen. Das Fräswerkzeug besteht aus einem rotationssymmetrischen Grundkörper 4 in Form einer Scheibe, über deren Umfang in Drehrichtung 14 vor einem Nutschneider 3 ein Vorschneider 1 angeordnet ist. In Drehrichtung vor dem Nutschneider 3 ist im Grundkörper 4 ein sich radial und in Umfangsrichtung erstreckender Freiraum als Spanraum 2 vorgesehen. An dem bezogen auf die Drehrichtung 14 nachlaufenden Ende 21 des Spanraums 2 ist der Nutschneider 3 angeordnet, der im Ausführungsbeispiel aus einem Hartmetallplättchen 16 besteht. Das Hartmetallplättchen 16 ist in einem im Ende 21 axial durchgehend gefrästen Plattensitz 19 (Fig. 1) eingelötet und steht mindestens auf einer axialen Stirnseite des Grundkörpers 4 über. Die Schneide 6 des Nutschneiders 3 ist an den dem Spanraum 2 zugewandten Kanten ausgebildet und vorzugsweise mit polykristallinem Diamant beschichtet. Dabei ist die radial äußere, in Drehrichtung 14 vorlaufende Kante als Dachschneide 6a ausgebildet, welche über eine Fase 9 in eine Seitenschneide 6b übergeht. Die entgegen der Drehrichtung 14 an die Dachschneide 6a und die Seitenschneide 6b anschließende Rückenfläche liegt unter einem Freiwinkel zum Flugkreis 7 (Fig. 2) der Dachschneide 6a. Vorzugsweise ist die Dachschneide 6a an beiden Enden mit einer Fase 9 versehen, wie Fig. 5 zeigt. Insbesondere steht das Hartmetallplättchen 16 auf beiden axialen Stirnseiten des Grundkörpers 4 über (Fig. 4) und bildet dort jeweils Seitenschneiden aus.

An dem vorlaufenden, dem Nutschneider 3 abgewandten Ende 22 des Spanraums 2 ist ein Plattensitz 19 gefräst, der im gezeigten Ausführungsbeispiel axial durchgehend vorgesehen ist. Der Plattensitz 19 dient im Ausführungsbeispiel der Halterung eines Hartmetallplättchens 17, an welchem die Schneide 5 des Vorschneiders 1 angeordnet ist. Insbesondere bei dünnen Grundkörpern 4 ist die Anordnung eines axial durchgehenden Plattensitzes 19 vorteilhaft.

Wie insbesondere die Fig. 2 und 3 zeigen, ist der Plattensitz 19 derart ausgebildet, daß der Vorschneider 1 einerseits unter einem Achswinkel 12 zur Drehachse des Grundkörpers 4 liegt und andererseits mit einer Radialen 15 durch die Dachschneide 5a einen Spanwinkel 13 begrenzt. Der Vorschneider 1 steht über eine axiale Stirnseite des Grundkörpers 4 über; an dem Überstand ist eine Seitenschneide 5b ausgebildet, die vorzugsweise über einen Eckwinkel 5c in eine Dachschneide 5a übergeht. Die Anordnung ist dabei so getroffen, daß das der Seitenschneide 5b abgewandte Ende 30 der Dachschneide 5a in Drehrichtung der Dachschneide 5a vorläuft, so daß der Schnitteingriff zunächst im Bereich der Nutmitte 10 (Fig. 6) erfolgt und erst zum Schluß des Schnittes an der Nutkante 11 (Fig. 6). Dieser sogenannte ziehende Schnitt gewährleistet, daß der Vorschneider 1 das Material zunächst quetscht und es danach einkerbt bzw. einschneidet. Eine Vorspaltwirkung tritt nicht auf.

Im gezeigten Ausführungsbeispiel hat die radial äußerste Kante der ebenfalls diamantbesetzten Schneide 5 des Vorschneiders 1 einen geringeren Flugkreis 8 als die radial äußere Kante der Schneide 6 des Nutschneiders 3. Die in Drehrichtung 14 vorlaufende Kante 30 des Vorschneiders 1 liegt auf einem kleineren Flugkreis als der Flugkreis 8 des Vorschneiders 1. Durch den geringeren Flugkreis 8 der Vorschneide 1 ist gewährleistet, daß die Schneide die Deckschicht nicht völlig durchtrennt, sondern daß anstelle eines Schnittes nur ein Kerben erfolgt. Das endgültige Durchtrennen der Faser (bei Holz) erfolgt erst durch den Nutschneider 3 selbst. Die geringere mechanische Belastung der Nutkante erlaubt eine höhere Vorschubgeschwindigkeit. Bevorzugt hat der Nutschneider an beiden Enden der Dachschneide Fasen 9 (Fig. 5), so daß an der später entstehenden Nutkante 11 kein abruptes Abscheren der Fasern erfolgt.

Wie aus Fig. 2 zu ersehen, ist der Vorschneider 1 entgegen der Drehrichtung 14 zum Nutschneider 3 hin flach geneigt angeordnet, wobei er mit der Radialen 15 durch die Dachschneide 5a des Vorschneiders 1 einen Spanwinkel 13 von etwa 55° bildet. Der Vorschneider 1 ragt dabei insbesondere mit seinem die Rückenfläche der Dachschneide bildenden Ende des Hartmetallplättchens 17 in den Spanraum 2 ein. Der Fuß des Vorschneiders liegt radial unterhalb der Umfangsfläche des Grundkörpers, wodurch ein vorgelagerter kleiner Spanraum gebildet ist.

Das Werkzeug erhält durch die erfindungsgemäße Anordnung der Vorschneider 1 eine sägezahnartige Gestalt. Die Vorschneider 1 stehen abwechselnd über die eine und andere axiale Stirnseite des Grundkörpers 4 über, wobei zwischen ihnen jeweils ein Nutschneider 3 liegt, der zu beiden axialen Stirnseiten übersteht. Die Seitenschneide des Nutschneiders liegt dabei in einer Ebene mit der Seitenschneide des Vorschneiders.

Um insbesondere nach einem Nachschärfen der Schneider die gewünschte Arbeitsbreite zu gewährleisten, ist das Werkzeug geteilt ausgebildet. Die Werkzeugteile sind axial zueinander einstellbar. Vorteilhaft weist ein Werkzeugteil nur zu einer axialen Stirnseite überstehende Schneider und das andere Werkzeugteil nur zur anderen axialen Stirnseite überstehende Schneider auf. Die Nutschneider der Werkzeugteile überdecken sich - in Umfangsrichtung gesehen - axial.

Im Ausführungsbeispiel sind als Schneidglieder Hartmetallplättchen 16 bzw. 17 vorgesehen, die vorzugsweise mit polykristallinem Diamant beschichtet sind. Die Schneidglieder können vorteilhaft auch aus anderen Werkstoffplättchen bestehen, so z. B. aus Cermets oder Keramiken mit oder ohne Beschichtung.

## Patentansprüche

1. Werkzeug zum Fräsen von Nuten oder Falzen, bestehend aus einem rotationssymmetrischen Grundköper (4), auf dessen Umfang in Drehrichtung (14) vor je einem Nutschneider (3) ein Vorschneider (1) angeordnet ist sowie mit einem in Drehrichtung (14) vor dem Nutschneider ausgebildeten Spanraum (2) im Grundkörper (4),
dadurch gekennzeichnet, daß der Vorschneider (1) an dem dem Nutschneider (3) abgewandten Ende (22) des Spanraums (2) angeordnet ist, daß der Vorschneider entgegen der Drehrichtung (14) zum Nutschneider (3) hin flach geneigt liegt und mit der Radialen (15) durch den Vorschneider (1) einen spitzen Spanwinkel (13) begrenzt.

2. Werkzeug nach Anspruch 1,
dadurch gekennzeichnet, daß der Vorschneider (1) in die Spannut (2) einragt.

3. Werkzeug nach Anspruch 1 oder 2,
dadurch gekennzeichnet, daß der Flugkreis (8) des Vorschneiders (1) kleiner ist als der Flugkreis (7) des Nutschneiders (3).

4. Werkzeug nach einem der Ansprüche 1 bis 3,
dadurch gekennzeichnet, daß der Vorschneider (1) unter einem Winkel (12) zur Drehachse des Grundkörpers (4) angeordnet ist.

5. Werkzeug nach einem der Ansprüche 1 bis 4,
dadurch gekennzeichnet, daß der Vorschneider (1) eine Dachschneide (5a) und eine Seitenschneide (5b) aufweist, und daß das der Seitenschneide (5b) abgewandte Ende (30) der Dachschneide (5a) in Drehrichtung (14) des Grundkörpers (4) der Seitenschneide (5b) vorläuft.

6. Werkzeug nach Anspruch 5,
dadurch gekennzeichnet, daß das vorlaufende Ende (30) der Dachschneide (5a) unterhalb des Flugkreises (8) des Vorschneiders (1) liegt.

7. Werkzeug nach einem der Ansprüche 1 bis 6,
dadurch gekennzeichnet, daß der Vorschneider (1) in einem axial gefrästen Plattensitz (19) angeordnet ist.

8. Werkzeug nach Anspruch 7,
dadurch gekennzeichnet, daß der Plattensitz (19) axial durchgehend ausgebildet ist.

9. Werkzeug nach einem der Ansprüche 1 bis 8,
dadurch gekennzeichnet, daß die Dachschneide (6a) des Nutschneiders (3) insbesondere an dem Übergang zu seiner Seitenschneide (6b) eine Fase (9) aufweist.

10. Werkzeug nach einem der Ansprüche 1 bis 9,
dadurch gekennzeichnet, daß das Werkzeug geteilt ist und sich die Nutschneider (3) der Werkzeugteile überdecken.
